(19) Europäisches Patentamt
European Patent Office
Office européen des brevets

(11) **EP 4 648 206 A1**

(12) **EUROPEAN PATENT APPLICATION**
published in accordance with Art. 153(4) EPC

(43) Date of publication:
**12.11.2025 Bulletin 2025/46**

(21) Application number: **24750294.1**

(22) Date of filing: **30.01.2024**

(51) International Patent Classification (IPC):
*H01M 50/443* (2021.01)     *H01M 50/414* (2021.01)
*H01M 50/417* (2021.01)     *H01M 50/42* (2021.01)
*H01M 50/429* (2021.01)     *H01M 50/434* (2021.01)
*H01M 50/446* (2021.01)     *H01M 50/451* (2021.01)
*H01M 50/466* (2021.01)

(52) Cooperative Patent Classification (CPC):
**H01M 50/414; H01M 50/417; H01M 50/42;
H01M 50/429; H01M 50/434; H01M 50/443;
H01M 50/446; H01M 50/451; H01M 50/466;
Y02E 60/10**

(86) International application number:
**PCT/JP2024/002865**

(87) International publication number:
**WO 2024/162345 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2023   JP 2023014811
02.02.2023   JP 2023014845**

(71) Applicant: **Daramic, LLC
Charlotte, NC 28273 (US)**

(72) Inventors:
• **KIYAMA, Tomonori
Tokyo 100-0006 (JP)**
• **IWAMA, Juri
Tokyo 100-0006 (JP)**
• **SASAYAMA, Masaaki
Tokyo 100-0006 (JP)**
• **FUNAKI, Masuro
Tokyo 100-0006 (JP)**

(74) Representative: **Tomkins & Co
5 Dartmouth Road
Dublin 6, D06 F9C7 (IE)**

(54) **SEPARATOR FOR LEAD STORAGE BATTERIES, AND LEAD STORAGE BATTERY USING SAME**

(57)     Provided is a separator for batteries in which an electrolytic solution contains water. The separator: is characterized by comprising a substrate and a layer laminated on at least one surface of the substrate; and is characterized in that the layer contains inorganic particles, and when Y (ml/100 g) represents the DOA oil absorption of the inorganic particles and X ($\mu$m) represents the median diameter of the inorganic particles, $Y \leq 2.5X + 200$ is satisfied.

**Description**

FIELD

The present disclosure relates to a separator for lead-acid storage batteries and a lead-acid storage battery using the same.

BACKGROUND

Lead-acid storage batteries are widely used worldwide in in-vehicle applications, for example, passenger vehicles, buses, trucks, motorcycles, and golf carts; in industrial applications, for example, forklifts, agricultural machinery, railroad, and uninterrupted power supplies (UPS); and communication devices. Particularly, in in-vehicle applications of recent years, lead-acid storage batteries are used in electric vehicles (EV), hybrid electric vehicles (HEV), and idling-start-and-stop (ISS) vehicles.

When a lead-acid storage battery is charged, lead sulfate in the positive and negative electrodes is decomposed, releasing a high concentration of sulfate ions into the electrolyte solution, which may cause stratification (a phenomenon in which sulfuric acid concentration at the bottom portion of a battery case increases compared to the top portion thereof). Particularly, in charging-discharging cycles in a partially charged state, stirring of the electrolyte solution is less likely to occur, and thus stratification is likely to occur. When stratification occurs, degradation mode of the lead-acid storage battery is accelerated due to this phenomenon and lifespan is shortened, and thus inhibiting stratification is an important object.

PTL 1 proposes a separator for lead-acid storage batteries that inhibits stratification, which is a technical problem in lead-acid storage batteries, by providing an inorganic material layer of, for example, silica on a surface of the separator substrate.

[CITATION LIST]

[PATENT LITERATURE]

[PTL 1] WO 2021/118909

SUMMARY

[TECHNICAL PROBLEM]

PTL 1 has room for improvement from the viewpoint of a method of forming a uniform inorganic material layer free of surface cracks and a method of inhibiting shedding of inorganic material from the substrate when the inorganic material layer is bent. Further, the separator for lead-acid storage batteries in the prior art described in PTL 1 has room for improvement regarding control technique of lowering ionic resistance of the inorganic material layer within a lead-acid storage battery.

The invention of the present disclosure has been made in view of the above circumstances, and has an object of providing a separator for batteries that contain water in an electrolyte solution, comprising, on a substrate, a uniform inorganic material layer free of surface cracks.

[SOLUTION TO PROBLEM]

The object above is achieved by the following technical means.

(1) A separator for batteries that contain water in an electrolyte solution, comprising a substrate and a layer laminated on at least one side of the substrate, wherein

the layer comprises inorganic particles, and
when a DOA oil absorption of the inorganic particles is Y (ml/100 g) and a median diameter of the inorganic particles is X ($\mu$m), Y $\leq$ 2.5X + 200 is satisfied.

(2) The separator according to Item 1, which is for lead-acid storage batteries.
(3) The separator according to Item 1 or 2, wherein the median diameter of the inorganic particles is 7 $\mu$m or more.
(4) The separator according to any one of Items 1 to 3, wherein the median diameter of the inorganic particles is 65 $\mu$m

or less.

(5) The separator according to any one of Items 1 to 4, wherein the DOA oil absorption of the inorganic particles is 110 (ml/100 g) or more.

(6) The separator according to any one of Items 1 to 5, wherein a content of the inorganic particles in 100 parts by weight of the layer is 60 parts by weight or more and 95 parts by weight or less.

(7) The separator according to any one of Items 1 to 6, wherein the inorganic particles comprise at least one selected from the group consisting of silica, alumina, kaolin, titania, aluminum silicate, barium sulfate, and sodium aluminosilicate.

(8) The separator according to any one of Items 1 to 7, wherein the inorganic particles consist of silica.

(9) The separator according to any one of Items 1 to 8, comprising a polysaccharide in the layer.

(10) The separator according to Item 9, wherein a content of the polysaccharide is 0.5 parts by weight or more and 10 parts by weight or less in 100 parts by weight of the layer.

(11) The separator according to Item 9 or 10, wherein the polysaccharide is carboxymethyl cellulose.

(12) The separator according to any one of Items 1 to 11, wherein the layer comprises a resin binder, and a content of the resin binder in 100 parts by weight of the layer is 5 parts by weight or more and 40 parts by weight or less.

(13) The separator according to Item 12, wherein the resin binder is an acrylic resin.

(14) The separator according to Item 13, wherein the acrylic resin comprises at least one selected from the group consisting of styrene, $\alpha$-methylstyrene, and methyl methacrylate.

(15) The separator according to Item 13 or 14, wherein the acrylic resin comprises butadiene.

(16) The separator according to any one of Items 1 to 15, wherein a thickness of the layer is 20 $\mu$m or more and 1000 $\mu$m or less.

(17) The separator according to any one of Items 1 to 16, wherein the substrate is a microporous membrane comprising a polyolefin.

(18) The separator according to any one of Items 1 to 17, wherein a content of polyolefin in 100 parts by weight of the layer is 15 parts by weight or less.

(19) The separator according to any one of Items 1 to 18, wherein a content of polyolefin in 100 parts by weight of the layer is 0 parts by weight or 5 parts by weight or less.

(20) The separator according to any one of Items 1 to 19, wherein the substrate is a microporous membrane comprising a polyolefin, and

a weight ratio of polyolefin contained in 100 parts by weight of the layer is smaller than a weight ratio of polyolefin contained in 100 parts by weight of the substrate.

(21) The separator according to any one of Items 1 to 20, wherein the substrate is a microporous membrane comprising inorganic particles, and

a weight ratio of inorganic particles contained in 100 parts by weight of the layer is larger than a weight ratio of inorganic particles contained in 100 parts by weight of the substrate.

(22) The separator according to any one of Items 1 to 21, wherein the layer has a bent portion.

(23) The separator according to any one of Items 1 to 22, wherein the separator for lead-acid storage batteries is envelope-shaped.

(24) A lead-acid storage battery comprising a battery case; a lead oxide positive electrode; a lead negative electrode; and a dilute sulfuric acid, wherein

the separator according to any one of claims 1 to 23 is disposed between the lead oxide positive electrode and the lead negative electrode.

(25) A lead-acid storage battery comprising a battery case; a lead oxide positive electrode; a lead negative electrode; and a dilute sulfuric acid, wherein

at least one of the lead oxide positive electrode and the lead negative electrode is housed in the separator according to claim 22 or 23.

[ADVANTAGEOUS EFFECTS OF INVENTION]

According to the present disclosure, in a separator for batteries that contain water in an electrolyte solution, comprising a substrate and a layer comprising inorganic particles laminated at least on one side of the substrate, it is possible to provide a uniform layer that inhibits surface cracks in the layer and/or a uniform layer that is free of surface cracks on the substrate.

DESCRIPTION OF EMBODIMENTS

Hereinafter, an embodiment of the present disclosure (hereinafter, abbreviated as "present embodiment") will be described in detail. Note that, the present disclosure is not limited to the following embodiment, and various modifications can be made with the scope of the disclosure.

<<Separator for batteries>>

The separator for batteries according to the present embodiment are for batteries that contain water in an electrolyte solution, and is characterized as comprising a substrate and a layer laminated on at least one side of the substrate, wherein the layer comprises inorganic particles, and when a DOA oil absorption of the inorganic particles is Y (ml/100 g) and a median diameter of the inorganic particles is X ($\mu$m), $Y \leq 2.5X + 200$ is satisfied. The separator for batteries according to the present embodiment, by satisfying the relationship, can inhibit surface cracks in the layer.

Inhibition of surface cracks in a layer laminated on at least one side of a substrate or a uniform layer free of surface cracks is remarkable in separators used for lead-acid storage batteries in particular, and thus the separator for batteries according to the present embodiment is preferably for lead-acid storage batteries.

<<Inorganic particles of layer>>

A layer of the separator for batteries according to the present embodiment, from the viewpoint of forming pores within the layer to inhibit stratification, preferably comprises inorganic particles. In the present specification, a layer comprising inorganic particles may be called an inorganic material layer or an inorganic particle-containing layer.

Examples of materials of the inorganic particles used in the layer include oxide-based ceramics such as silica (amorphous silica, precipitated silica, gelled silica, and fumed silica), alumina, sulfates (for example, barium sulfate and calcium sulfate), titania (rutile type and anatase type), gibbsite, bayerite, boehmite, zirconia, magnesia, ceria, yttria, zinc oxide, and iron oxide; nitride-based ceramics such as silicon nitride, titanium nitride, and boron nitride; silicon carbide, calcium carbonate, aluminum sulfate, aluminum hydroxide, magnesium hydroxide, potassium titanate, talc, synthetic kaolinite, kaolin clay, kaolin (kaolinite, dickite, and nacrite), calcined kaolin, fraipontite, stevensite, dickite, nacrite, halloysite, pyrophyllite, odinite, montmorillonite, beidellite, nontronite, volkonskoite, saponite, hectorite, fluorohectorite, sauconite, swinefordite, vermiculite, fluorovermiculite, berthierine, sericite, amesite, kellyite, fraiponite, brindleyite, bentonite, zeolite, biotite, phlogopite, fluorophlogopite, annite, eastonite, tainiolite, siderophyllite, tetra-ferri-annite, lepidolite, tetrasilicic fluoromica, polylithionite, muscovite, celadonite, ferroceladonite, ferro-aluminoceladonite, aluminoceladonite, tobelite, paragonite, clintonite, kinoshitalite, bityite, anandite, margarite, clinochlore, chamosite, pennantite, nimite, baileychlore, donbassite, cookeite, sudoite, hydrotalcite, calcium silicate, magnesium silicate, aluminum silicate, diatomite, and quartz sand. The inorganic particles according to the present embodiment are used as one type alone or as a combination of two or more types.

Among the examples above, the material of the inorganic particles is preferably at least one selected from the group consisting of silica, alumina, kaolin, titania, aluminum silicate, barium sulfate, and sodium aluminosilicate, which have excellent acid resistance and oxidation resistance and are highly hydrophilic. In a battery containing water in an electrolyte solution, for example, in a lead-acid storage battery, keeping sulfuric acid concentration in the electrolyte solution spatially uniform is necessary to inhibit stratification. To uniformize the sulfuric acid concentration within the battery case, it is preferable that sulfate ions released from the positive electrode and the negative electrode by battery reactions be retained in voids of the layer and precipitation of the sulfate ions be inhibited. More specifically, since the surfaces of the inorganic particles exhibit a positive electric charge in an acidic solution and their electrostatic interaction with the sulfate ions, which carry a negative electric charge, can inhibit precipitation of the sulfate ions, the inorganic particles are preferably silica. As the silica, precipitated silica, gelled silica, or fumed silica can be used. However, from the viewpoints of price and handling such as ease of powder weighing, precipitated silica is the most preferable.

The inorganic particles according to the present embodiment, from the viewpoint of inhibiting surface cracks due to agglomeration of inorganic particles, preferably have a large median diameter. In addition, the larger the DOA oil absorption of the inorganic particles, the more the structures of secondary particles composed of primary particles of the inorganic particles develop, the more easily the resin binder is consumed inside the secondary particles. As a result, the resin binder is less likely to contribute to binding between secondary particles, and surface cracks due to agglomeration of inorganic particles are more likely to occur. Thus, it is preferable that the DOA oil absorption be small. Therefore, in a lead-acid storage battery having the layer according to the present embodiment, to inhibit surface cracks in the layer, controlling the median diameter and the DOA oil absorption of the inorganic particles simultaneously is necessary. From the viewpoint of inhibiting surface cracks in the layer, more specifically, it is preferable that when DOA oil absorption of the inorganic particles is Y (ml/100 g) and median diameter of the inorganic particles is X ($\mu$m), $Y \leq 2.5X + 200$ be satisfied.

The median diameter X ($\mu$m) of inorganic particles in the present specification is determined by dispersing the inorganic particles in water and measuring using an MT3300EX II (optical bench) and SDC (sample circulator), manufactured by MicrotracBEL Corp., under the following measurement conditions and analysis conditions. For the measurement software, Microtrac II is used.

[Measurement conditions]

SetZero time: 10 s
Measurement time: 10 s
Number of measurements: 1

[Analysis conditions]

Transparency: Drop
Particle refractive index: 1.46 (silica particles as example)
Shape: Non-spherical
Solvent refractive index: 1.333
Distribution: Volume

The DOA oil absorption (ml/100 g) of the present specification is a value obtained by using an absorptometer (automatic oil absorption measuring device) to add DOA (dioctyl adipate) dropwise to inorganic particles with kneading and measure the dropped amount when a predetermined torque value is reached, in accordance with ISO 19246.

When the median diameter of the inorganic particles is small, the layer is made dense and the density is increased, increasing ionic resistance as a separator for lead-acid storage batteries that contain water in an electrolyte solution. Thus, the median diameter is preferably 7 $\mu$m or more, more preferably 8 $\mu$m or more, even more preferably 9 $\mu$m or more, even more preferably 10 $\mu$m or more, even more preferably 11 $\mu$m or more, even more preferably 12 $\mu$m or more, even more preferably 13 $\mu$m or more, even more preferably 14 $\mu$m or more, even more preferably 15 $\mu$m or more, even more preferably 16 $\mu$m or more, even more preferably 17 $\mu$m or more, even more preferably 18 $\mu$m or more, even more preferably 19 $\mu$m or more, even more preferably 20 $\mu$m or more, even more preferably 21 $\mu$m or more, even more preferably 22 $\mu$m or more, even more preferably 23 $\mu$m or more, even more preferably 25 $\mu$m or more, or even more preferably 30 $\mu$m or more, still even more preferably 40 $\mu$m or more, and further even more preferably 50 $\mu$m or more.

When the median diameter of the inorganic particles is small, agglomeration of particles within the layer is likely to occur, and thus residual stress in the layer is increased. When the separator for lead-acid storage batteries according to the present invention is folded, a large number of cracks occur in the layer, whereby powder shedding of the inorganic particles is likely to occur. Thus, the median diameter is preferably 7 $\mu$m or more, more preferably 8 $\mu$m or more, and even more preferably 9 $\mu$m or more, even more preferably 10 $\mu$m or more, even more preferably 11 $\mu$m or more, even more preferably 12 $\mu$m or more, even more preferably 13 $\mu$m or more, even more preferably 14 $\mu$m or more, even more preferably 15 $\mu$m or more, even more preferably 16 $\mu$m or more, even more preferably 17 $\mu$m or more, even more preferably 18 $\mu$m or more, even more preferably 19 $\mu$m or more, or even more preferably 20 $\mu$m or more.

If the median diameter of the inorganic particles is large, when the layer is folded, interfacial peeling occurs over a wide area on the large inorganic particle surface, and powder shedding of the inorganic particles from the layer is likely to occur. Thus, the median diameter of the inorganic particles is preferably less than 70 $\mu$m, more preferably 69 $\mu$m or less, and even more preferably 68 $\mu$m or less, even more preferably 67 $\mu$m or less, even more preferably 66 $\mu$m or less, even more preferably 65 $\mu$m or less, even more preferably 66 $\mu$m or less, even more preferably 65 $\mu$m or less, even more preferably 64 $\mu$m or less, even more preferably 63 $\mu$m or less, even more preferably 62 $\mu$m or less, even more preferably 61 $\mu$m or less, even more preferably 60 $\mu$m or less, even more preferably 58 $\mu$m or less, even more preferably 56 $\mu$m or less, even more preferably 54 $\mu$m or less, or even more preferably 52 $\mu$m or less. As mentioned above, by controlling the median diameter of inorganic particles used in the layer, powder shedding of the inorganic particles can be inhibited when the layer is folded. Therefore, the separator for batteries that contain water in an electrolyte solution according to the present embodiment can be used as a separator with a layer having a bent portion. Specifically, a separator for batteries that has a layer on a substrate surface can be folded to be processed into an envelope shape wherein the layer has a bent portion, and preferably, a separator for lead-acid storage batteries is processed into an envelope shape wherein the layer described above has a bent portion.

The larger the DOA oil absorption of the inorganic particles, the more the structures of secondary particles composed of primary particles of the inorganic particles develop, and the more easily ions pass through and diffuse inside the secondary particles, thereby lowering ionic resistance as a separator for batteries that contain water in an electrolyte solution. Thus, the DOA oil absorption is preferably more than 100 (ml/100 g), more preferably 105 (ml/100 g) or more, and even more preferably 110 (ml/100 g) or more, even more preferably 120 (ml/100 g) or more, even more preferably 130 (ml/100 g) or more, even more preferably 140 (ml/100 g) or more, even more preferably 150 (ml/100 g) or more, even more preferably 160 (ml/100 g) or more, even more preferably 170 (ml/100 g) or more, or even more preferably 180 (ml/100 g) or more. The upper limit of the DOA oil absorption can be arbitrarily determined according to the relational formula: $Y \leq 2.5X + 200$, described above.

From the viewpoint of forming voids capable of retaining sulfate ions within the layer by the inorganic particles to inhibit stratification, or from the viewpoint of lowering ionic resistance as a lead-acid storage battery, the content of the inorganic particles relative to 100 parts by weight of the layer is preferably 60 parts by weight or more, more preferably 61 parts by weight or more, and even more preferably 62 parts by weight or more, even more preferably 63 parts by weight or more, even more preferably 64 parts by weight or more, even more preferably 65 parts by weight or more, even more preferably 66 parts by weight or more, even more preferably 67 parts by weight or more, even more preferably 68 parts by weight or more, even more preferably 69 parts by weight or more, even more preferably 70 parts by weight or more, even more preferably 71 parts by weight or more, even more preferably 72 parts by weight or more, even more preferably 73 parts by weight or more, even more preferably 74 parts by weight or more, even more preferably 75 parts by weight or more, even more preferably 76 parts by weight or more, even more preferably 77 parts by weight or more, even more preferably 78 parts by weight or more, even more preferably 79 parts by weight or more, or even more preferably 80 parts by weight or more. When inorganic particles are contained in a substrate of the separator for lead-acid storage batteries according to the present embodiment, from the viewpoint of forming voids capable of retaining sulfate ions within the layer by the inorganic particles, or from the viewpoint of lowering ionic resistance as a lead-acid storage battery, the weight ratio of inorganic particles contained in 100 parts by weight of the above layer is preferably larger than the weight ratio of inorganic particles contained in 100 parts by weight of the substrate.

From the viewpoint of enhancing binding property of inorganic particles within the layer or binding the layer to the substrate by a resin binder, the content of the inorganic particles relative to 100 parts by weight of the layer is preferably 95 parts by weight or less, more preferably 94 parts by weight or less, and even more preferably 93 parts by weight or less, even more preferably 92 parts by weight or less, even more preferably 91 parts by weight or less, even more preferably 90 parts by weight or less, even more preferably 89 parts by weight or less, even more preferably 88 parts by weight or less, even more preferably 87 parts by weight or less, even more preferably 86 parts by weight or less, even more preferably 85 parts by weight or less, even more preferably 84 parts by weight or less, even more preferably 83 parts by weight or less, or even more preferably 82 parts by weight or less.

<<Resin binder of layer>>

The layer according to the present embodiment, from the viewpoint of enhancing binding property of inorganic particles within the layer or binding the layer to the substrate, preferably comprises a resin binder. Examples of materials of the resin binder can include acrylic resins, styrene resins, acrylic-urethane resins, acrylic-styrene resins, vinyl acetate-acrylic resins, styrene-butadiene resins, acrylonitrile-butadiene resins, natural rubber resins, polybutadiene resins (BR resins), methyl methacrylate-butadiene resins, 2-vinylpyridine-styrene-butadiene resins (VP resins), chloroprene resins, polyolefin resins such as polyethylene, polypropylene, polybutene, and copolymers of monomers thereof; modified polyolefin resins obtained by chlorinating or acid-modifying the polyolefin resins; fluorine-containing resins such as polyvinylidene fluoride and polytetrafluoroethylene; fluorine-containing rubbers such as vinylidene fluoride-hexafluoropropylene-tetrafluoroethylene copolymers and ethylene-tetrafluoroethylene copolymers; (meth)acrylic acid-styrene-butadiene copolymer resins and hydrogenated products thereof; polyvinyl alcohol reins, and polyvinyl alcohol-polyacetate copolymer resins.

Among the resins above, from the viewpoint of improving acid resistance, binding property with the inorganic particles and substrate, and heat resistance, an acrylic resin and/or a styrene resin is preferable, and thereamong, an acrylic resin is the most preferable. In the present specification, "acrylic resin" encompasses acrylic copolymer resins, for example, acrylic-urethane resins, acrylic-styrene resins, acrylic-styrene-butadiene resins, vinyl acetate-acrylic resins, and polymers of acrylic resins. In the present specification, "styrene resin" encompass styrene copolymer resins, for example, acrylic-styrene resins, styrene-butadiene resins, acrylic-styrene-butadiene resins, 2-vinylpyridine-styrene-butadiene resins, and polymers of styrene resins.

The acrylic resin, from the viewpoint of acid resistance, preferably comprises at least one selected from the group consisting of styrene, $\alpha$-methylstyrene, and methyl methacrylate, or preferably comprises a structural unit derived from at least one selected from the group consisting of styrene, $\alpha$-methylstyrene, and methyl methacrylate. To alleviate shrinkage stress during drying, it is more preferable that butadiene or a structural unit derived therefrom be contained in the acrylic resin.

When a polyolefin resin, which is a hydrophobic material such as polyethylene or polypropylene, is used as the resin binder, from the viewpoints of inhibiting stratification by increasing wettability between the layer and the dilute sulfuric acid that is an electrolyte solution and facilitating incorporation of sulfate ions within the layer, the content of the polyolefin relative to 100 parts by weight of the layer, is preferably 15 parts by weight or less, more preferably 14 parts by weight or less, and even more preferably 13 parts by weight or less, even more preferably 12 parts by weight or less, even more preferably 11 parts by weight or less, even more preferably 10 parts by weight or less, even more preferably 9 parts by weight or less, even more preferably 8 parts by weight or less, even more preferably 7 parts by weight or less, even more preferably 6 parts by weight or less, even more preferably 5 parts by weight or less, even more preferably 4 parts by weight or less, or even more preferably 3 parts by weight or less. When a polyolefin is contained in the layer and the substrate of the separator for batteries according to the present embodiment, from the viewpoint of increasing affinity of the layer with an electrolyte solution or dilute sulfuric acid comprising water to inhibit stratification, it is preferable that the weight ratio of polyolefin contained in 100 parts by weight of the layer above be smaller than the weight ratio of polyolefin contained in 100 parts by weight of the substrate. Note that, when the layer according to the present embodiment does not comprise a polyolefin, the content of polyolefin in 100 parts by weight of the layer may be 0 parts by weight.

The resin binder, from the viewpoint of enhancing binding property of inorganic particles within the layer or binding the layer to the substrate, is preferably contained at 5 parts by weight or more relative to 100 parts by weight of the layer. The content of the resin binder is more preferably 6 parts by weight or more, and even more preferably 7 parts by weight or more, even more preferably 8 parts by weight or more, even more preferably 9 parts by weight or more, even more preferably 10 parts by weight or more, even more preferably 11 parts by weight or more, even more preferably 12 parts by weight or more, even more preferably 13 parts by weight or more, even more preferably 14 parts by weight or more, or even more preferably 15 parts by weight or more.

From the viewpoint of forming voids composed of inorganic particles within the layer to form spaces wherein sulfate ions are retained, the content of the resin binder is preferably 40 parts by weight or less, more preferably 39 parts by weight or less, and even more preferably 38 parts by weight or less, even more preferably 36 parts by weight or less, even more preferably 34 parts by weight or less, even more preferably 32 parts by weight or less, even more preferably 30 parts by weight or less, even more preferably 28 parts by weight or less, even more preferably 26 parts by weight or less, even more preferably 24 parts by weight or less, even more preferably 22 parts by weight or less, or even more preferably 20 parts by weight or less relative to 100 parts by weight of the layer.

From the viewpoints of forming voids composed of inorganic particles within the layer and lowering ionic resistance as a separator for batteries, the content of the resin binder is preferably 40 parts by weight or less, more preferably 39 parts by weight or less, and even more preferably 38 parts by weight or less, even more preferably 36 parts by weight or less, even more preferably 34 parts by weight or less, even more preferably 32 parts by weight or less, even more preferably 30 parts by weight or less, even more preferably 28 parts by weight or less, even more preferably 26 parts by weight or less, even more preferably 24 parts by weight or less, even more preferably 22 parts by weight or less, or even more preferably 20 parts by weight or less relative to 100 parts by weight of the layer.

These resins may comprise one or more additional components in the composition exemplified above. The resin is not limited to one type, and a plurality thereof can be used in combination. For example, a combination of an acrylic resin and a styrene resin can be exemplified.

<<Thickener of layer>>

The layer according to the present embodiment, from the viewpoint of inhibiting peeling of the layer from the substrate or inhibiting shedding of inorganic particles from the layer, preferably comprises a thickener. The thickener, from the viewpoint of binding property with the substrate and inorganic particles, is preferably a polysaccharide.

<<Polysaccharide>>

Examples of the polysaccharide include cellulose derivatives such as carboxymethyl cellulose (CMC), carbomethoxy cellulose, hydroxyethyl cellulose, and hydroxypropyl cellulose; natural polysaccharides such as xanthan gum, diutan gum, welan gum, gellan gum, guar gum, carrageenan gum, and pectin; and starches such as dextrin and pregelatinized starch. The layer according to the present embodiment, from the viewpoint of binding property with the substrate and inorganic particles, preferably comprises carboxymethyl cellulose (CMC). Carboxymethyl cellulose (CMC) is more preferable when the inorganic particles are of a non-conductive material, and is particularly preferable when the inorganic particles are of a non-conductive material having a DOA oil absorption of 15 ml/100 g to 700 ml/100 g. The polysaccharide can be used as one type alone or as a combination of two or more types.

From the viewpoint of inhibiting peeling of the layer from the substrate or inhibiting shedding of inorganic particles from the layer, the thickener, such as a polysaccharide, is preferably contained at 0.1 parts by weight or more relative to 100 parts by weight of the layer. The content of the thickener is more preferably 0.2 parts by weight or more, and even more preferably 0.3 parts by weight or more, even more preferably 0.4 parts by weight or more, even more preferably 0.5 parts by weight or more, even more preferably 0.6 parts by weight or more, even more preferably 0.7 parts by weight or more, even more preferably 0.8 parts by weight or more, or even more preferably 0.9 parts by weight or more.

From the viewpoint of inhibiting agglomeration of inorganic particles within the layer, the content of the thickener, such as a polysaccharide, relative to 100 parts by weight of the layer is preferably 10 parts by weight or less, more preferably 9 parts by weight or less, and even more preferably 8 parts by weight or less, even more preferably 7 parts by weight or less, even more preferably 6 parts by weight or less, even more preferably 5 parts by weight or less, or even more preferably 4 parts by weight or less.

<<Density of layer>>

From the viewpoints of forming voids within the layer and lowering ionic resistance as a separator for lead-acid storage batteries, the density of the layer is preferably 1 g/cm$^3$ or less, more preferably 0.9 g/cm$^3$ or less, and even more preferably 0.8 g/cm$^3$ or less, even more preferably 0.7 g/cm$^3$ or less, even more preferably 0.6 g/cm$^3$ or less, even more preferably 0.5 g/cm$^3$ or less, or even more preferably 0.4 g/cm$^3$ or less.

From the viewpoint of inhibiting shedding of inorganic particles of the layer, the density of the layer is preferably 0.01 g/cm$^3$ or more, more preferably 0.02 g/cm$^3$ or more, and even more preferably 0.03 g/cm$^3$ or more, even more preferably 0.04 g/cm$^3$ or more, even more preferably 0.05 g/cm$^3$ or more, even more preferably 0.06 g/cm$^3$ or more, even more preferably 0.07 g/cm$^3$ or more, even more preferably 0.08 g/cm$^3$ or more, even more preferably 0.09 g/cm$^3$ or more, even more preferably 0.1 g/cm$^3$ or more, even more preferably 0.11 g/cm$^3$ or more, even more preferably 0.12 g/cm$^3$ or more, even more preferably 0.13 g/cm$^3$ or more, even more preferably 0.14 g/cm$^3$ or more, even more preferably 0.15 g/cm$^3$ or more, even more preferably 0.16 g/cm$^3$ or more, even more preferably 0.17 g/cm$^3$ or more, even more preferably 0.18 g/cm$^3$ or more, even more preferably 0.19 g/cm$^3$ or more, or even more preferably 0.2 g/cm$^3$ or more.

<<Additional material of layer>>

A conductive material can be added to the layer according to the present embodiment to impart electrical conductivity to the layer and to promote decomposition of sulfation formed on the positive electrode and the negative electrode of the lead-acid storage battery by bringing the layer into contact with the positive electrode and the negative electrode of the lead-acid storage battery. The conductive material is preferably a carbon material, and examples thereof include carbon clusters such as graphite, activated carbon, carbon black, furnace black, acetylene black, ketjen black, carbon nanotube, graphene, and fullerene; carbon monolithic materials, and mixtures thereof. Among the carbon materials above, furnace black, acetylene black, and ketjen black, which have excellent electrical conductivity and are easily formed into a porous body, are preferable.

<<Thickness of layer>>

The thickness of the layer according to the present embodiment, from the viewpoint of lowering ionic resistance as a separator for batteries and the viewpoint of inhibiting surface cracks caused by residual stress within the layer, is preferably 1000 μm or less, more preferably 900 μm or less, and even more preferably 800 μm or less, even more preferably 700 μm or less, even more preferably 600 μm or less, even more preferably 550 μm or less, even more preferably 500 μm or less, even more preferably 450 μm or less, even more preferably 400 μm or less, even more preferably 350 μm or less, even more preferably 300 μm or less, even more preferably 290 μm or less, even more preferably 280 μm or less, even more preferably 260 μm or less, or even more preferably 250 μm or less.

The thickness of the layer, from the viewpoint of retaining sulfate ions, which are released from the positive electrode and the negative electrode of the lead-acid storage battery into the electrolyte solution during charging, within the layer to inhibit stratification, is preferably 20 μm or more, more preferably 30 μm or more, and even more preferably 40 μm or more, even more preferably 50 μm or more, even more preferably 60 μm or more, even more preferably 70 μm or more, even more preferably 80 μm or more, even more preferably 90 μm or more, even more preferably 100 μm or more, even more preferably 110 μm or more, even more preferably 120 μm or more, even more preferably 130 μm or more, even more preferably 140 μm or more, even more preferably 150 μm or more, even more preferably 160 μm or more, even more preferably 170 μm or more, even more preferably 180 μm or more, even more preferably 190 μm or more, even more preferably 200 μm or more, even more preferably 210 μm or more, even more preferably 220 μm or more, even more preferably 230 μm or more, or even more preferably 240 μm or more.

<<Substrate>>

To allow ions to pass through and prevent electrical short-circuiting, the substrate is preferably a microporous membrane, and more preferably a microporous membrane comprising a polyolefin and/or inorganic particles. The mean flow pore size of the substrate having micropores is preferably 500 nm or less, more preferably 400 nm or less, and even more preferably 300 nm or less, even more preferably 200 nm or less, even more preferably 175 nm or less, even more preferably 150 nm or less, even more preferably 125 nm or less, even more preferably 100 nm or less, even more preferably 80 nm or less, even more preferably 60 nm or less, or even more preferably 40 nm or less. However, from the viewpoint of inhibiting the micropores of the substrate from entering into an obstructed state due to by-products accompanying the charging-discharging reactions of the battery, the mean flow pore size is preferably 1 nm or more, more preferably 10 nm or more, even more preferably 15 nm or more, and still even more preferably 20 nm or more. The maximum pore size of the substrate, from the viewpoint of inhibiting electrical short-circuiting, is preferably 1000 nm or less, more preferably 800 nm or less, and even more preferably 500 nm or less, even more preferably 400 nm or less, even more preferably 300 nm or less, even more preferably 200 nm or less, even more preferably 175 nm or less, even more preferably 150 nm or less, even more preferably 125 nm or less, or even more preferably 100 nm or less. The maximum pore size of the substrate, from the viewpoint of inhibiting the micropores of the substrate from entering into an obstructed state due to by-products accompanying the charging-discharging reactions of the battery, is preferably 5 nm or more, more preferably 10 nm or more, even more preferably 20 nm or more, and still even more preferably 30 nm or more.

The maximum pore size and mean flow pore size of the substrate can be determined as follows.

<Maximum pore size>

A Perm Porometer (model: CFP-1500AL) from PMI is used for the measuring device, and a substrate is used as the measuring sample. In a state where all pores of the substrate are filled with a test liquid having a known surface tension, compressed air is flowed through the substrate to measure the pore diameter thereof. As the test liquid, a Galwick liquid manufactured by PMI is used for measuring samples having a maximum pore size of less than 100 $\mu$m, and pure water is used for measuring samples having a maximum pore size of 100 $\mu$m or more. First, a substrate cut to 25 mm$\Phi$ is immersed in the test liquid, and after removing excess test liquid, measurement is carried out. The pore size of the pores can be calculated from the pressure when air passes through the pores filled with the test liquid and the surface tension of the test liquid. The following formula is used for the calculation.

$$d_{pore} = C \cdot \gamma/P$$

where $d_{pore}$ is the pore diameter of the substrate; y is the surface tension of the test liquid; P is the minimum air pressure at which air passes through the pore size; and C is a constant.

The air flow rate (wet flow rate) is measured when the pressure P applied to the substrate immersed in the test liquid is continuously increased. At the start of measurement, since all pores of a measuring sample, such as a nonwoven fabric, are filled with the test liquid, the air flow rate is zero. However, as pressure increases, air eventually passes through the pore having the largest pore size, and a positive air flow rate is observed for the first time (this point in time is referred to as bubble point). Maximum pore size $d_{max}$ in the present specification means a pore diameter of the substrate at which the bubble point is derived.

<Mean flow pore size>

In the <Maximum pore size> measurement above, air flow rate increases as pressure further increases after the bubble point, and approaches the air flow rate of the substrate in a dry state (dry flow rate). The air flow rate once the smallest pore opens matches the dry flow rate completely. In this measurement method, the cumulative filter flow rate (unit: %) is defined as the wet flow rate at a certain air pressure divided by the dry flow rate at the same pressure. The pore diameter that opens at the air pressure at which the cumulative filter flow rate is 50% is defined as the mean flow pore size in the present specification.

The substrate is not particularly limited and needs only to be one that has micropores through which ions can pass, but preferably includes porous films manufactured from natural and synthetic materials, such as thermoplastic polymers such as polyvinyl and polyolefin; thermosetting polymers such as phenolic resins; rubber materials such as natural and synthetic rubber and latex; fiber materials such as synthetic wood pulp (SWP), glass fiber, synthetic fiber, and cellulose fiber; and combinations thereof. Thereamong, the substrate preferably comprises polyethylene. From the viewpoint of improving film strength or durability in a lead-acid storage battery, the polyethylene is preferably a high molecular weight polyethylene having a weight average molecular weight of 600,000 or greater. The polyethylene is more preferably an ultra-high molecular weight polyethylene (UHMWPE), i.e., a polyethylene having a weight average molecular weight of 1,000,000 or greater, particularly 4,000,000 or greater, and most preferably 5,000,000 to 8,000,000. Note that, ultra-high molecular weight polyethylene in the present specification means a polyethylene having a weight average molecular weight of 1,000,000 or greater.

The substrate according to the present embodiment preferably comprises 10 parts by weight or more and 40 parts by weight or less of polyethylene relative to 100 parts by weight of the substrate. From the viewpoint of increasing mechanical strength and acid resistance of the substrate by the polyethylene, the content of polyethylene relative to 100 parts by weight of the substrate is preferably 10 parts by weight or more, more preferably 15 parts by weight or more, even more preferably 20 parts by weight or more, and particularly preferably 25 parts by weight or more. From the viewpoint of lowering the blending ratio of hydrophobic polyethylene in the substrate to lower electrical resistance inside the battery due to the substrate, the substrate preferably comprises hydrophilic inorganic particles. In that case, the content of polyethylene relative to 100 parts by weight of the substrate is preferably 40 parts by weight or less, more preferably 35 parts by weight or less, and even more preferably 30 parts by weight or less. The lower limit value of the polyethylene content relative to 100 parts by weight of the substrate is not particularly limited, and for example, may be more than 0 parts by weight or 1 part by weight or more.

The substrate according to the present embodiment preferably comprises 40 parts by weight or more and 70 parts by weight or less of inorganic particles relative to 100 parts by weight of the substrate. From the viewpoint of increasing hydrophilicity of the substrate, the substrate comprises preferably 30 parts by weight or more of inorganic particles, or comprises preferably 40 parts by weight or more of inorganic particles, more preferably 45 parts by weight or more, and even more preferably 50 parts by weight relative to 100 parts by weight of the substrate. When the weight ratio of inorganic particles in the substrate is large, the weight ratio of polyethylene is relatively decreased, and the binding strength between inorganic particles and polyethylene is weakened. Thus, the substrate comprises preferably 70 parts by weight or less of inorganic particles, more preferably 69 parts by weight or less, and even more preferably 68 parts by weight or less, even more preferably 67 parts by weight or less, even more preferably 66 parts by weight or less, even more preferably 65 parts by weight or less, even more preferably 64 parts by weight or less, even more preferably 63 parts by weight or less, even more preferably 62 parts by weight or less, or even more preferably 61 parts by weight or less relative to 100 parts by weight of the substrate.

Examples of the inorganic particle material contained in the substrate include oxide-based ceramics such as silica (amorphous silica, precipitated silica, gelled silica, and fumed silica), alumina, sulfates (for example, barium sulfate and calcium sulfate), titania (rutile type and anatase type), gibbsite, bayerite, boehmite, zirconia, magnesia, ceria, yttria, and iron oxide; nitride-based ceramics such as silicon nitride, titanium nitride, and boron nitride; silicon carbide, calcium carbonate, aluminum sulfate, aluminum hydroxide, magnesium hydroxide, potassium titanate, talc, synthetic kaolinite, kaolin clay, kaolin (kaolinite, dickite, and nacrite), calcined kaolin, fraipontite, stevensite, dickite, nacrite, halloysite, pyrophyllite, odinite, montmorillonite, beidellite, nontronite, volkonskoite, saponite, hectorite, fluorohectorite, sauconite, swinefordite, vermiculite, fluorovermiculite, berthierine, sericite, amesite, kellyite, fraiponite, brindleyite, bentonite, zeolite, biotite, phlogopite, fluorophlogopite, annite, eastonite, tainiolite, siderophyllite, tetra-ferri-annite, lepidolite, tetrasilicic fluoromica, polylithionite, muscovite, celadonite, ferroceladonite, ferro-aluminoceladonite, aluminoceladonite, tobelite, paragonite, clintonite, kinoshitalite, bityite, anandite, margarite, clinochlore, chamosite, pennantite, nimite, baileychlore, donbassite, cookeite, sudoite, hydrotalcite, calcium silicate, magnesium silicate, aluminum silicate, diatomite, and quartz sand.

Among the examples above, the inorganic particles used in the substrate are preferably particles of silica, alumina, kaolin, titania, aluminum silicate, or barium sulfate, which have excellent acid resistance and oxidation resistance and are highly hydrophilic, more preferably silica particles, and even more preferably amorphous silica particles manufactured by a precipitation method.

The inorganic particles according to the present embodiment are used as one type alone or as a combination of two or more types.

The substrate according to the present embodiment, from the viewpoint of improving acid resistance of the substrate, preferably comprises 5 to 35 parts by weight of a plasticizer relative to 100 parts by weight of the substrate. The plasticizer is preferably an oil, and can be petroleum, a paraffin-based mineral oil, a mineral oil, or any combination thereof.

The thickness of the substrate according to the present embodiment is not particularly limited, but from the viewpoint of lowering ionic resistance within a battery, is preferably 2.0 mm or less, more preferably 1.5 mm or less, and even more preferably 1.0 mm or less, even more preferably 0.75 mm or less, even more preferably 0.50 mm or less, or even more preferably 0.30 mm or less. In addition, from the viewpoint of increasing film strength, the thickness of the substrate or separator is preferably 0.05 mm or more, more preferably 0.10 mm or more, and even more preferably 0.15 mm or more. When forming a sealing portion by, for example, meshing two or more layers of separator laminated bodies between gears, the thickness of each layer is set to a predetermined value or more to increase sealing strength of the sealing portion. Also from this viewpoint, the thickness of the separator is preferably 0.05 mm or more, more preferably 0.10 mm or more, and even more preferably 0.15 mm or more. The thickness in the present specification is determined as the arithmetic mean value of thicknesses at five regions, obtained by carrying out a cross-sectional SEM (scanning electron microscope) observation of the separator and measuring the thicknesses at five different regions from the observed portion. Note that, in the case of a separator having a rib (convex portion) on the separator surface, the thickness of the separator mentioned above means the thickness of the base portion (flat portion) excluding the rib (convex portion).

When the substrate of the separator for batteries of the present embodiment is produced by, for example, extrusion molding, a rib (convex shape) can be applied in any shape to the separator surface using a mechanical press, a calender stack, a calender roll, or a pattern roll, after the separator is extruded. In some embodiments, the separator can have a rib on at least one side thereof. Since mixing of dilute sulfuric acid within the battery case can be promoted to inhibit stratification, the height of a rib (convex portion) based on the base portion (flat portion) is preferably more than 0 μm or 1 μm or more, more preferably 30 μm or more, and even more preferably 100 μm or more. From the viewpoint of decreasing the volume of a lead-acid storage battery, the height of the rib based on the base portion (flat portion) is preferably 3 mm or less, and more preferably 2 mm or less. From the viewpoint of increasing acid resistance, the rib is preferably imparted on at least one side of the separator, and may be imparted on both sides as needed. Note that, if a substrate having a rib (convex shape) on the surface is provided with a layer, the thickness of the layer is determined as the arithmetic mean value of thicknesses at five regions, obtained by carrying out a cross-sectional SEM (scanning electron microscope) observation of the layer and measuring the thicknesses at five different regions from the observed portion. If the substrate surface has a rib (convex portion), the thickness of the layer mentioned above means the layer thickness from the base portion (flat portion) excluding the rib (convex portion) of the substrate.

<<Battery containing water in electrolyte solution>>

The battery according to the present embodiment is preferably a battery containing water in an electrolyte solution. In the present specification, the expression "battery containing water in an electrolyte solution" refers to a battery wherein the main component of the electrolyte solution is a water-based liquid, and examples thereof include lead-acid batteries, nickel-cadmium batteries, nickel-metal hydride batteries, alkaline manganese batteries, zinc-air batteries, and redox flow batteries.

<<Lead-acid storage battery>>

The embodiment of the separator for lead-acid storage batteries can be determined so as to be suitable for each constituting member of a lead-acid storage battery. One aspect of the lead-acid storage battery according to the present invention is a lead-acid storage battery comprising a battery case; a lead oxide positive electrode; a lead negative electrode; and dilute sulfuric acid as an electrolyte solution and having the separator for lead-acid storage batteries according to the present invention disposed between the positive electrode and the negative electrode.

A positive electrode lattice constituting the positive electrode may be lead or a lead alloy, and the positive electrode active material may be lead oxide, for example, lead dioxide. A negative electrode lattice constituting the negative electrode may be lead or a lead alloy, the negative electrode active material may be lead, and the lead negative electrode itself may be, for example, in a sponge-like form. In addition, the active materials of the positive electrode and the negative electrode may comprise 50% by weight or less of other metal elements in the composition. Further, the dilute sulfuric acid is sulfuric acid having a specific gravity of 1.1 to 1.4, and may further comprise an additive such as aluminum ions or lithium ions.

The separator for lead-acid storage batteries of the present embodiment has a uniform layer free of surface cracks and is also inhibited from powder shedding during bending. Thus, by using the separator in a lead-acid storage battery, stratification within the battery can be uniformly inhibited, thereby allowing more uniform charging-discharging reactions to proceed within electrode surfaces. Therefore, it is preferable that the separator according to one aspect of the present invention be disposed between the positive electrode and the negative electrode of a lead-acid storage battery. Note that, from the viewpoint of retaining sulfate ions, which are released from the positive electrode or the negative electrode into the electrolyte solution during charging, within the layer, it is preferable that at least a portion of or the entire surface of the layer of the separator for lead-acid storage batteries of the present invention be in contact with the positive electrode surface or the negative electrode surface. From the viewpoint of further inhibiting stratification, it is more preferable that the separator for lead-acid storage batteries of the present invention have the layer on both sides of the substrate and at least a portion of or the entire surface of the layer on each side be in contact with the positive and negative electrode surfaces.

Since the layer of the separator for lead-acid storage batteries according to the present invention is inhibited from powder shedding during bending, even when a lead-acid storage battery is assembled in a form wherein the layer has a bent portion, it is possible to assemble the battery in a state where powder shedding of the inorganic particles is inhibited. In addition, since the bent portion of the layer is also uniform, stratification inside the battery can be further uniformly inhibited. Accordingly, a lead-acid storage battery comprising a battery case; a lead oxide positive electrode; a lead negative electrode; and dilute sulfuric acid as an electrolyte solution, having the separator for lead-acid storage batteries according to the present invention disposed between the positive electrode and the negative electrode, and having a bent portion in the layer of the separator for lead-acid storage batteries is also one aspect of the lead-acid storage battery of the present invention.

More specifically, a lead-acid storage battery, wherein a separator for a lead-acid storage battery comprising a battery case; a lead oxide positive electrode; a lead negative electrode; and dilute sulfuric acid as an electrolyte solution and having the separator for lead-acid storage batteries according to the present invention disposed between the positive electrode and the negative electrode is processed in an envelope shape with a layer having a bent portion, and one of the positive electrode or the negative electrode or both the positive and negative electrodes are housed in the envelope-shaped separator for lead-acid storage batteries, is also one aspect of the lead-acid storage battery of the present invention.

The separator for lead-acid storage batteries according to the present embodiment can inhibit surface cracks in the layer and inhibit powder shedding during bending, and thus can be used in both open-type lead-acid storage batteries and valve-regulated lead-acid storage batteries, wherein stratification is inhibited.

<<Manufacturing method of separator for lead-acid storage batteries>>

<Production of substrate>

Hereinafter, a manufacturing method of the substrate will be described by exemplifying a substrate composed of a polyolefin, for example, ultra-high molecular weight polyethylene. However, the substrate is not limited to substrates obtained by the following manufacturing method, as long as the layer of the present disclosure can be formed thereon.

The manufacturing method of the substrate comprises the following:

a step of preparing a thermoplastic polymer, for example, ultra-high molecular weight polyethylene (hereinafter, referred to as "UHMWPE");

a step of preparing a particulate filler, such as particles;

a step of preparing a processing plasticizer, which is a liquid substance at room temperature (25°C);

a step of mixing the UHMWPE, the particulate filler, and the processing plasticizer to form a mixture;

a step of extruding the mixture through a die, for example, a slot die or an inflation die for processing to form a sheet; and

an extraction step of partially or completely removing the plasticizer from the sheet, thereby forming a microporous membrane. After the step of forming the sheet and before the extraction step, the sheet may be further processed by a method of casting onto a cooling roller, a calendering method, or an inflation method. The sheet processed by casting or calendering can then be subjected to the extraction step above to partially or completely remove the plasticizer and thereby form micropores in the substrate.

The substrate obtained by the method above comprises UHMWPE, a plasticizer (if partially extracted), and a particulate filler. The particulate filler is preferably of inorganic particles from the viewpoints of acid resistance and heat resistance. The pores preferably occupy 25 percent (%) to 90% of the volume of the entire substrate, and more preferably has an occupancy rate of 30% to 80%, even more preferably 40% to 70%.

In the manufacturing method of the substrate, the substrate surface can be imparted with arbitrary structures by a stretching step and/or an embossing roll or calender roll, before or after the extraction step.

<Formation method of layer>

A method of forming a layer on a substrate will be exemplified, but is not limited thereto. One example of forming a layer on a substrate comprises the following:

a step of mixing a material for forming a layer with a dispersion medium to produce a slurry;

a step of applying the slurry to a substrate surface; and

a step of drying the applied portion to remove the dispersion medium.

The layer formation material may be a layer-constituting material mentioned above for the layer according to the present embodiment, and is preferably uniformized in a dispersion medium to form a mixture. The dispersion medium may be water, or may be an organic solvent. The application method includes applying the slurry in a wet state to a surface of the substrate using, for example, die coating method, gravure coating method, or spray method.

<Dispersion medium>

The dispersion medium may be a single solvent or a mixed solvent composed of two or more solvents. From the viewpoint of removing the solvent in a later step, it is preferable that a solvent that does not easily remain on a substrate and the layer and is easily removed be selected.

Specifically, examples of solvents include those as indicated below:

water;

alcohols such as methanol, ethanol, 1-propanol, 2-propanol, 1-butanol, 2-butanol, tert-butyl alcohol, and 3-methoxy-3-methyl-1-butanol,

glycols such as ethylene glycol, diethylene glycol, propylene glycol, propylene glycol monomethyl ether, ethylene glycol monomethyl ether, ethylene glycol monoethyl ether, ethylene glycol-t-butyl ether, ethylene glycol monobutyl ether, ethylene glycol monopropyl ether, diethylene glycol monobutyl ether, triethylene glycol monobutyl ether, dipropylene glycol monomethyl ether, ethylene glycol dimethyl ether, and dipropylene glycol dimethyl ether; ketones such as acetone, methyl ethyl ketone, methyl isobutyl ketone, diisobutyl ketone, and cyclohexanone; esters such as methyl acetate, ethyl acetate, propyl acetate, butyl acetate, $\gamma$-butyrolactone, $\gamma$-valerolactone, and $\delta$-valerolactone; carbonates such as dimethyl carbonate, ethyl methyl carbonate, diethyl carbonate, and propylene carbonate; carboxylic acids such as formic acid, acetic acid, butyric acid, and propionic acid; inorganic acids such as sulfuric acid, hydrochloric acid, and nitric acid; amines such as ammonia water, monoethanolamine, diethanolamine, and triethanolamine; ethers such as diethyl ether, diisopropyl ether, 1,4-dioxane, and tetrahydrofuran; nitriles such as acetonitrile, propionitrile, and benzonitrile; phenols such as phenol, cresol, and chlorophenol; other aprotic solvents such as methylene chloride, hexane, toluene, dimethylsulfoxide, N,N-dimethylformamide, N,N-dimethylacetamide, N-methyl-2-pyrollidone, and hexamethylphosphoric triamide; and mixtures of two or more of the solvents listed above.

EXAMPLES

Hereinafter, the Examples of the present disclosure will be described in detail. However, these are described for the purpose of explanation, and the scope of the present disclosure is not limited to the following Examples. Various evaluation results of separators and lead-acid storage batteries obtained in the Examples and Comparative Examples are shown in Table 1. Evaluation methods of various layer physical properties are described below.

<<Median diameter>>

Inorganic particles were dispersed in water, and median diameter was determined by measuring using an MT3300EX II (optical bench) and SDC (sample circulator), manufactured by MicrotracBEL Corp., under the following measurement conditions and analysis conditions. For the measurement software, Microtrac II was used. Measurement results are shown in Table 1.

[Measurement conditions]

SetZero time: 10 s
Measurement time: 10 s
Number of measurements: 1

[Analysis conditions]

Transparency: Drop
Particle refractive index: 1.46 (silica particles as example)
Shape: Non-spherical
Solvent refractive index: 1.333
Distribution: Volume

<<DOA oil absorption>>

For DOA oil absorption (ml/100 g), an absorptometer (automatic oil absorption measuring device) was used to add DOA (dioctyl adipate) dropwise to the inorganic particles with kneading, in accordance with ISO 19246. Table 1 describes the value obtained by measuring the dropped amount when a predetermined torque value was reached.

<<Thickness layer>>

A cross-section of the separator having a layer was observed by SEM, and the thickness of the layer was measured at five different regions within the layer plane under the condition of a 200× magnification. Table 1 describes the arithmetic mean value of the thicknesses of the five regions. The unit is $\mu$m.

<<Surface cracks>>

A layer was provided on a substrate surface by the procedure of the Examples and Comparative Examples below. The presence of cracks on the surface of the layer was confirmed. The results are indicated in Table 1.

<<Powder shedding during bending>>

A layer was provided on a substrate surface by the procedure of the Examples and Comparative Examples below, the separator was folded so that the layer was on the inside, powder shedding of the inorganic particles from the layer was confirmed. The presence thereof is indicated in Table 1.

<<Ionic resistance in electrolyte solution and ionic resistance ratio>>

The ionic resistance of a sample was measured using a Palico measurement system manufactured by Caltronics, using dilute sulfuric acid having a specific gravity of 1.28 in a sulfuric acid bath and setting the temperature of the sulfuric acid bath to 27°C. As a pretreatment before measurement, the separator was immersed in boiling water for 10 min, and then immersed in dilute sulfuric acid having a specific gravity of 1.28 and a temperature of 27°C for 20 min. Thereafter, ionic resistance of the separator was measured at three points under the measurement conditions above, and the arithmetic mean value was determined. The unit is $\Omega \cdot cm^2$. Table 1 describes the ionic resistance ratio obtained by dividing the ionic resistance value of the separator with various layers on the substrate surface by the ionic resistance value of the substrate alone.

<<Example 1>>

An ultra-high molecular weight polyethylene resin powder, a surfactant, a mineral oil, and precipitated amorphous silica having a median diameter of 31 $\mu$m and a DOA oil absorption of 283 ml/100 g were heated, melted, and mixed with a mixer to obtain a raw material composition. This raw material composition was extruded using an extruder attached at the tip with a T-die, at a temperature of the melting point of the polyethylene or higher, and was then passed through calender rolls to obtain a film-like material. Next, the film-like material was immersed in a solvent to extract and remove a portion of the mineral oil, followed by drying and cooling to obtain an elongate separator (substrate) for evaluation, having a composition of 22 parts by weight of polyethylene resin, 56 parts by weight of silica, 2 parts by weight of surfactant, and 20 parts by weight of mineral oil. Both surfaces of the substrate were flat, the thickness thereof was 0.20 mm, the mean flow pore size was 30 nm, and the maximum pore size was 83 nm.

A slurry was prepared to provide a layer on the substrate surface. 80.0 parts by weight of precipitated silica (amorphous) having a median diameter of 48 $\mu$m and a DOA oil absorption of 305 ml/100 g as solid content, 18.5 parts by weight (solid content equivalent) of acrylic resin (acrylic emulsion) as a resin binder, and 1.5 parts by weight of carboxymethyl cellulose as a thickener were added to water to prepare a water-based slurry having a solid content concentration of 13.0% by weight.

The slurry was manually applied (hand-coated) to one side of the substrate using an applicator and dried in an oven at 80°C for 15 min to obtain a separator having the layer on one side of the substrate. At this time, the applicator gap (clearance formed between the substrate surface and applicator bottom portion) was adjusted so as to obtain the layer thickness indicated in Table 1. The layer physical properties of the obtained separator are indicated in Table 1.

<<Examples 2 to 23, Examples 33 to 40, and Comparative Examples 1 to 4>>

Except that the median diameter and DOA oil absorption of the precipitated amorphous silica and the layer composition of Example 1 were changed to the conditions described in Table 1, the same as in Example 1 was carried out.

<<Examples 24 to 28>>

Except that the median diameter and DOA oil absorption of the precipitated amorphous silica and the layer composition of Example 1 were changed to the conditions described in Table 1 and the acrylic resin was changed to one comprising styrene, the same as in Example 1 was carried out.

<<Examples 29 and 30>>

Except that the median diameter and DOA oil absorption of the precipitated amorphous silica and the layer composition of Example 1 were changed to the conditions described in Table 1 and the acrylic resin was changed to one comprising butadiene, the same as in Example 1 was carried out.

<<Example 31>>

Except that the precipitated amorphous silica of Example 1 was changed to sodium aluminosilicate and the median diameter, DOA oil absorption, and layer composition were changed to the conditions described in Table 1, the same as in Example 1 was carried out.

<<Example 32>>

Except that the precipitated amorphous silica of Example 1 was changed to aluminum silicate and the median diameter, DOA oil absorption, and layer composition were changed to the conditions described in Table 1, the same as in Example 1 was carried out.

<<Example 41>>

Except that the thickener of Example 1 was changed to diutan gum and the median diameter, DOA oil absorption, and layer composition were changed to the conditions described in Table 1, the same as in Example 1 was carried out.

<<Example 42>>

Except that the thickener of Example 1 was changed to xanthan gum and the median diameter, DOA oil absorption, and layer composition were changed to the conditions described in Table 1, the same as in Example 1 was carried out.

<<Regarding results of Examples and Comparative Examples>>

Results of the Examples and Comparative Examples are shown in Table 1 below.

[Table 1-1]

| | | | Example 1 | Example 2 | Example 3 | Example 4 | Example 5 | Example 6 |
|---|---|---|---|---|---|---|---|---|
| Inorganic particle | Median diameter | μm | 48 | 70 | 39 | 39 | 25 | 24 |
| | DOA oil absorption | ml/100 g | 305 | 280 | 295 | 295 | 240 | 240 |
| Layer composition | Inorganic particle | % by weight | 80.0 | 80.0 | 80.0 | 90.7 | 80.0 | 90.7 |
| | Binder | | 18.5 | 18.5 | 18.5 | 8.2 | 18.5 | 8.2 |
| | Thickener | | 1.5 | 1.5 | 1.5 | 1.2 | 1.5 | 1.2 |
| Layer physical properties | Layer thickness | μm | 230 | 250 | 260 | 253 | 260 | 243 |
| | Presence of surface cracks | - | No | No | No | No | No | No |
| | Presence of powder shedding during bending | - | No | Yes | No | No | No | No |
| | Ionic resistance ratio | - | 1.04 | 1.02 | 1.10 | 1.06 | 1.21 | 1.12 |

[Table 1-2]

| | | | Example 7 | Example 8 | Example 9 | Example 10 | Example 11 | Example 12 |
|---|---|---|---|---|---|---|---|---|
| Inorganic particle | Median diameter | μm | 24 | 15 | 15 | 15 | 15 | 5 |
| | DOA oil absorption | ml/100 g | 240 | 210 | 210 | 120 | 145 | 200 |
| Layer composition | Inorganic particle | % by weight | 60.0 | 80.0 | 80.0 | 80.0 | 90.7 | 80.0 |
| | Binder | | 40.0 | 18.5 | 18.5 | 18.5 | 8.2 | 18.5 |
| | Thickener | | 0.0 | 1.5 | 1.5 | 1.5 | 1.2 | 1.5 |
| Layer physical properties | Layer thickness | μm | 220 | 231 | 360 | 230 | 30 | 200 |
| | Presence of surface cracks | - | No | No | No | No | No | No |
| | Presence of powder shedding during bending | - | No | No | No | No | No | Yes |
| | Ionic resistance ratio | - | 1.30 | 1.26 | 1.34 | 1.44 | 1.04 | 1.51 |

[Table 1-3]

| | | | Example 13 | Example 14 | Example 15 | Example 16 | Example 17 | Example 18 |
|---|---|---|---|---|---|---|---|---|
| Inorganic particle | Median diameter | μm | 60 | 60 | 9 | 60 | 15 | 24 |
| | DOA oil absorption | ml/100 g | 281 | 281 | 200 | 120 | 100 | 240 |
| Layer composition | Inorganic particle | % by weight | 80.0 | 80.0 | 80.0 | 80.0 | 80.0 | 80.0 |
| | Binder | | 18.5 | 18.5 | 18.5 | 18.5 | 18.5 | 17.0 |
| | Thickener | | 1.5 | 1.5 | 1.5 | 1.5 | 1.5 | 3.0 |
| Layer physical properties | Layer thickness | μm | 250 | 470 | 200 | 200 | 230 | 120 |
| | Presence of surface cracks | - | No | No | No | No | No | No |
| | Presence of powder shedding during bending | - | No | No | No | No | No | No |
| | Ionic resistance ratio | - | 1.03 | 1.18 | 1.38 | 1.48 | 1.54 | 1.21 |

[Table 1-4]

| | | | Example 19 | Example 20 | Example 21 | Example 22 | Example 23 | Example 24 |
|---|---|---|---|---|---|---|---|---|
| Inorganic particle | Median diameter | μm | 24 | 24 | 39 | 39 | 24 | 24 |
| | DOA oil absorption | ml/100 g | 240 | 240 | 295 | 295 | 240 | 240 |
| Layer composition | Inorganic particle | % by weight | 80.0 | 80.0 | 80.0 | 80.0 | 80.0 | 80.0 |
| | Binder | | 19.0 | 19.0 | 19.0 | 19.0 | 19.0 | 17.0 |
| | Thickener | | 1.0 | 1.0 | 1.0 | 1.0 | 1.0 | 3.0 |
| Layer physical properties | Layer thickness | μm | 40 | 40 | 200 | 100 | 120 | 120 |
| | Presence of surface cracks | - | No | No | No | No | No | No |
| | Presence of powder shedding during bending | - | No | No | No | No | No | No |
| | Ionic resistance ratio | - | 1.14 | 1.14 | 1.30 | 1.24 | 1.20 | 1.21 |

[Table 1-5]

| | | | Example 25 | Example 26 | Example 27 | Example 28 | Example 29 | Example 30 |
|---|---|---|---|---|---|---|---|---|
| Inorganic particle | Median diameter | μm | 24 | 24 | 39 | 39 | 39 | 24 |
| | DOA oil absorption | ml/100 g | 240 | 240 | 295 | 295 | 295 | 240 |
| Layer composition | Inorganic particle | % by weight | 80.0 | 80.0 | 80.0 | 80.0 | 80.0 | 80.0 |
| | Binder | | 19.0 | 19.0 | 19.0 | 19.0 | 19.0 | 19.0 |
| | Thickener | | 1.0 | 1.0 | 1.0 | 1.0 | 1.0 | 1.0 |
| Layer physical properties | Layer thickness | μm | 40 | 40 | 100 | 200 | 100 | 120 |
| | Presence of surface cracks | - | No | No | No | No | No | No |
| | Presence of powder shedding during bending | - | No | No | No | No | No | No |
| | Ionic resistance ratio | - | 1.14 | 1.14 | 1.24 | 1.30 | 1.24 | 1.20 |

[Table 1-6]

|  |  |  | Example 31 | Example 32 | Example 33 | Example 34 | Example 35 | Example 36 |
|---|---|---|---|---|---|---|---|---|
| Inorganic particle | Median diameter | μm | 7 | 50 | 25 | 25 | 25 | 25 |
|  | DOA oil absorption | ml/100 g | 170 | 175 | 240 | 240 | 240 | 240 |
| Layer composition | Inorganic particle | % by weight | 80.0 | 80.0 | 70.0 | 60.0 | 60.0 | 60.0 |
|  | Binder |  | 19.0 | 19.0 | 27.0 | 39.5 | 34.0 | 30.0 |
|  | Thickener |  | 1.0 | 1.0 | 3.0 | 0.5 | 6.0 | 10.0 |
| Layer physical properties | Layer thickness | μm | 100 | 100 | 100 | 100 | 100 | 100 |
|  | Presence of surface cracks | - | No | No | No | No | No | No |
|  | Presence of powder shedding during bending | - | No | No | No | No | No | No |
|  | Ion resistance ratio | - | 1.30 | 1.20 | 1.24 | 1.45 | 1.41 | 1.42 |

[Table 1-7]

|  |  |  | Example 37 | Example 38 | Example 39 | Example 40 | Example 41 | Example 42 |
|---|---|---|---|---|---|---|---|---|
| Inorganic particle | Median diameter | μm | 25 | 25 | 25 | 25 | 25 | 25 |
|  | DOA oil absorption | ml/100 g | 240 | 240 | 240 | 240 | 240 | 240 |
| Layer composition | Inorganic particle | % by weight | 80.0 | 80.0 | 90.0 | 95.0 | 80.0 | 80.0 |
|  | Binder |  | 14.0 | 10.0 | 4.0 | 4.5 | 17.0 | 17.0 |
|  | Thickener |  | 6.0 | 10.0 | 6.0 | 0.5 | 3.0 | 3.0 |
| Layer physical properties | Layer thickness | μm | 100 | 100 | 100 | 100 | 100 | 100 |
|  | Presence of surface cracks | - | No | No | No | No | No | No |
|  | Presence of powder shedding during bending | - | No | No | No | No | No | No |
|  | Ion resistance ratio | - | 1.20 | 1.10 | 1.10 | 1.11 | 1.21 | 1.22 |

[Table 1-8]

| | | | Comparative Example 1 | Comparative Example 2 | Comparative Example 3 | Comparative Example 4 |
|---|---|---|---|---|---|---|
| Inorganic particle | Median diameter | μm | 31 | 16 | 6.931 | 39 |
| | DOA oil absorption | ml/100 g | 283 | 248 | 255 | 310 |
| Layer composition | Inorganic particle | % by weight | 80.0 | 80.0 | 80.0 | 80.0 |
| | Binder | | 18.5 | 18.5 | 18.5 | 18.5 |
| | Thickener | | 1.5 | 1.5 | 1.5 | 1.5 |
| Layer physical properties | Layer thickness | μm | 210 | 190 | 210 | 280 |
| | Presence of surface cracks | - | Yes | Yes | Yes | Yes |
| | Presence of powder shedding during bending | - | | | | |
| | Ion resistance ratio | - | - | - | - | - |

From the results of the Examples and Comparative Examples, it was found that when DOA oil absorption of inorganic particles contained in a layer was Y (ml/100 g) and median diameter of the inorganic particles was X (μm), by satisfying $Y \leq 2.5X + 200$, surface cracks in the layer were inhibited.

It is preferable that, from the viewpoint of inhibiting surface cracks due to agglomeration of inorganic particles, the inorganic particles according to the present embodiment have a large median diameter. In addition, the larger the DOA oil absorption of the inorganic particles, the more the structures of secondary particles composed of primary particles of the inorganic particles develop, the more easily the resin binder is consumed inside the secondary particles. As a result, the resin binder is less likely to contribute to binding between secondary particles, and surface cracks due to agglomeration of inorganic particles are more likely to occur. Thus, it is preferable that the DOA oil absorption be small. Therefore, in a lead-acid storage battery having the layer according to the present embodiment, to inhibit surface cracks in the layer, controlling the median diameter and the DOA oil absorption of the inorganic particles simultaneously is necessary. As mentioned above, by satisfying $Y \leq 2.5X + 200$, surface cracks in the layer can be inhibited.

When the median diameter of the inorganic particles is small, the layer is made dense and the density is increased, increasing ionic resistance as a separator for lead-acid storage batteries. Thus, for example, from the viewpoint of setting the ionic resistance ratio to 1.50 or less, it is preferable that the median diameter be 7 μm or more. For example, in comparing Examples 3, 5, 12, and 15, it has been confirmed that by increasing the median diameter of the inorganic particles, the ionic resistance ratio was decreased.

In comparing Examples 12 and 15, when the median diameter of the inorganic particles is small, agglomeration of particles within the layer is likely to occur, and thus residual stress in the layer is increased. When the separator for lead-acid storage batteries according to the present invention is folded, a large number of cracks occur in the layer, whereby powder shedding of the inorganic particles occurs. From this viewpoint, it is preferable that the median diameter be 7 μm or more.

If the median diameter of the inorganic particles is large, as in Example 2, when the layer is folded, interfacial peeling occurs over a wide area on the large inorganic particle surface, and powder shedding of the inorganic particles from the layer is likely to occur. Thus, it is preferable that the median diameter of the inorganic particles be 65 μm or less.

From Examples 8, 10, and 16, the larger the DOA oil absorption of the inorganic particles, the more the structures of secondary particles composed of primary particles of the inorganic particles develop, and the more easily ions pass through and diffuse inside the secondary particles, thereby lowering ionic resistance as a separator for lead-acid storage batteries. Thus, for example, from the viewpoint of setting ionic resistance ratio to 1.50 or less, it is preferable that the DOA oil absorption be more preferably 110 (ml/100 g) or more.

INDUSTRIAL APPLICABILITY

The separator for batteries that contain water in an electrolyte solution of the present disclosure is useful for lead-acid storage batteries, for example, flooded batteries (FB) and are particularly suitable as separators in enhanced flooded batteries (EFB). In addition, the separator for lead-acid storage batteries according to the present invention can contribute to stratification inhibition, and thus can be used as a separator in valve-regulated lead-acid batteries (VRLA).

**Claims**

1. A separator for batteries that contain water in an electrolyte solution, comprising a substrate and a layer laminated on at least one side of the substrate, wherein

    the layer comprises inorganic particles, and
    when a DOA oil absorption of the inorganic particles is Y (ml/100 g) and a median diameter of the inorganic particles is X ($\mu$m), $Y \le 2.5X + 200$ is satisfied.

2. The separator according to claim 1, which is for lead-acid storage batteries.

3. The separator according to claim 1 or 2, wherein the median diameter of the inorganic particles is 7 $\mu$m or more.

4. The separator according to claim 1 or 2, wherein the median diameter of the inorganic particles is 65 $\mu$m or less.

5. The separator according to claim 1 or 2, wherein the DOA oil absorption of the inorganic particles is 110 (ml/100 g) or more.

6. The separator according to claim 1 or 2, wherein a content of the inorganic particles in 100 parts by weight of the layer is 60 parts by weight or more and 95 parts by weight or less.

7. The separator according to claim 1 or 2, wherein the inorganic particles comprise at least one selected from the group consisting of silica, alumina, kaolin, titania, aluminum silicate, barium sulfate, and sodium aluminosilicate.

8. The separator according to claim 1 or 2, wherein the inorganic particles consist of silica.

9. The separator according to claim 1 or 2, comprising a polysaccharide in the layer.

10. The separator according to claim 9, wherein a content of the polysaccharide is 0.5 parts by weight or more and 10 parts by weight or less in 100 parts by weight of the layer.

11. The separator according to claim 9, wherein the polysaccharide is carboxymethyl cellulose.

12. The separator according to claim 1 or 2, wherein the layer comprises a resin binder, and a content of the resin binder in 100 parts by weight of the layer is 5 parts by weight or more and 40 parts by weight or less.

13. The separator according to claim 12, wherein the resin binder is an acrylic binder.

14. The separator according to claim 13, wherein the acrylic resin comprises at least one selected from the group consisting of styrene, $\alpha$-methylstyrene, and methyl methacrylate.

15. The separator according to claim 13, wherein the acrylic resin comprises butadiene.

16. The separator according to claim 1 or 2, wherein a thickness of the layer is 20 $\mu$m or more and 1000 $\mu$m or less.

17. The separator according to claim 1 or 2, wherein the substrate is a microporous membrane comprising a polyolefin.

18. The separator according to claim 1 or 2, wherein a content of polyolefin in 100 parts by weight of the layer is 15 parts by weight or less.

19. The separator according to claim 1 or 2, wherein a content of polyolefin in 100 parts by weight of the layer is 0 parts by weight or 5 parts by weight or less.

20. The separator according to claim 1 or 2, wherein

the substrate is a microporous membrane comprising a polyolefin, and
a weight ratio of polyolefin contained in 100 parts by weight of the layer is smaller than a weight ratio of polyolefin contained in 100 parts by weight of the substrate.

21. The separator according to claim 1 or 2, wherein

the substrate is a microporous membrane comprising inorganic particles, and
a weight ratio of inorganic particles contained in 100 parts by weight of the layer is larger than a weight ratio of inorganic particles contained in 100 parts by weight of the substrate.

22. The separator according to claim 1 or 2, wherein the layer has a bent portion.

23. The separator according to claim 1 or 2, wherein the separator is envelope-shaped.

24. A lead-acid storage battery comprising a battery case; a lead oxide positive electrode; a lead negative electrode; and a dilute sulfuric acid, wherein
the separator according to claim 1 or 2 is disposed between the lead oxide positive electrode and the lead negative electrode.

25. A lead-acid storage battery comprising a battery case; a lead oxide positive electrode; a lead negative electrode; and a dilute sulfuric acid, wherein
at least one of the lead oxide positive electrode and the lead negative electrode is housed in the envelope-shaped separator according to claim 23.

## INTERNATIONAL SEARCH REPORT

| International application No. |
|---|
| **PCT/JP2024/002865** |

### A.    CLASSIFICATION OF SUBJECT MATTER

*H01M 50/443*(2021.01)i; *H01M 50/414*(2021.01)i; *H01M 50/417*(2021.01)i; *H01M 50/42*(2021.01)i; *H01M 50/429*(2021.01)i; *H01M 50/434*(2021.01)i; *H01M 50/446*(2021.01)i; *H01M 50/451*(2021.01)i; *H01M 50/466*(2021.01)i

FI:    H01M50/443 M; H01M50/414; H01M50/417; H01M50/42; H01M50/429; H01M50/434; H01M50/446; H01M50/451; H01M50/466

According to International Patent Classification (IPC) or to both national classification and IPC

### B.    FIELDS SEARCHED

Minimum documentation searched (classification system followed by classification symbols)

H01M50/40-497

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | US 2022/0021077 A1 (RHODIA OPERATIONS) 20 January 2022 (2022-01-20) examples 3, 5 | 1-8, 16-19, 24 |
| Y | examples 3, 5 | 22-23, 25 |
| A | | 9-15, 20-21 |
| Y | WO 2021/200290 A1 (ASAHI KASEI KABUSHIKI KAISHA) 07 October 2021 (2021-10-07) paragraphs [0022]-[0024] | 22-23, 25 |
| A | JP 2006-338918 A (TOMOEGAWA PAPER CO., LTD.) 14 December 2006 (2006-12-14) | 1-25 |
| A | WO 2012/165624 A1 (FUJI SILYSIA CHEMICAL LTD.) 06 December 2012 (2012-12-06) | 1-25 |
| A | WO 2019/146626 A1 (MITSUBISHI PAPER MILLS LTD.) 01 August 2019 (2019-08-01) | 1-25 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **16 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/002865**

| Patent document cited in search report | | | Publication date (day/month/year) | Patent family member(s) | | | Publication date (day/month/year) |
|---|---|---|---|---|---|---|---|
| US | 2022/0021077 | A1 | 20 January 2022 | WO | 2020/120393 | A1 | |
| | | | | EP | 3894354 | A1 | |
| WO | 2021/200290 | A1 | 07 October 2021 | US | 2023/0145483 | A1 | |
| | | | | paragraphs [0054]-[0056] | | | |
| | | | | EP | 4131625 | A1 | |
| | | | | CN | 115362597 | A | |
| JP | 2006-338918 | A | 14 December 2006 | (Family: none) | | | |
| WO | 2012/165624 | A1 | 06 December 2012 | (Family: none) | | | |
| WO | 2019/146626 | A1 | 01 August 2019 | US | 2021/0074981 | A1 | |
| | | | | EP | 3745493 | A1 | |
| | | | | CN | 111615765 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021118909 A